# EUROPÄISCHE PATENTANMELDUNG

(11) **EP 1 593 557 A1**
(43) Veröffentlichungstag der Anmeldung: **09.11.2005**
(21) Anmeldenummer: 05008481.3
(22) Anmeldetag: 19.04.2005
(51) Int. Cl.: B60R 21/26

(54) **Baugruppe aus einem Gehäuse und einem Gasgenerator für ein Seitengassackmodul**

(30) Priorität: 07.05.2004 DE 102004022732
(71) Anmelder: TRW Automotive GmbH, 73553 Alfdorf (DE)
(72) Erfinder: Heigl, Jürgen, 73560 Böbingen (DE)
(74) Vertreter: Strass, Jürgen

(57) **Zusammenfassung**

Eine Baugruppe ist aus einem Gehäuse (10) und einem im Gehäuse (10) angeordneten Gasgenerator (12) für ein Seitengassackmodul zusammengesetzt. Das Gehäuse (10) weist wenigstens zwei voneinander beabstandete Abströmöffnungen (20, 22) auf. Zwischen dem Gasgenerator (12) und der Innenseite des Gehäuses (10) sind Strömungskanäle (32) für das vom Gasgenerator (12) erzeugte Gas gebildet. Von den Strömungskanälen (32) führt wenigstens einer zur ersten Abströmöffnung (20) und wenigstens einer zur zweiten Abströmöffnung (22).

## Beschreibung

Die Erfindung betrifft eine Baugruppe nach dem Oberbegriff des Anspruchs 1. Die Erfindung betrifft ferner ein Seitengassackmodul für ein Insassenrückhaltesystem in einem Kraftfahrzeug mit einer derartigen Baugruppe, sowie ein Insassenrückhaltesystem für ein Kraftfahrzeug mit einem solchen Seitengassackmodul.

Bislang wurden zur Gasführung und -verteilung bei langgestreckten Seitengassäcken in der Regel Gaslanzen mit einer Vielzahl von definiert angeordneten Öffnungen oder Kiemen verwendet. In der DE-A-106 38 546 wird abweichend hiervon ein im Gassack angeordnetes Gasführungsteil aus einem faltbaren, flexiblen Material vorgeschlagen.

Eine Baugruppe der eingangs genannten Art ist aus der DE 299 21 743 U1 bekannt. Eine Gaszuführeinrichtung mit Abströmöffnungen an deren axialen Enden kann durch eine zusätzliche radiale Abströmöffnung ergänzt werden. Zwischen dem Gasgenerator und dem Außengehäuse der Gaszuführeinrichtung ist ein Druckausgleichsraum gebildet, der dafür sorgt, daß vor jeder Abströmöffnung der gleiche Druck herrscht.

In der DE 198 50 448 A1 ist eine Airbaganordnung mit einem Gasgenerator und einem darauf aufgesetzten Leitelement gezeigt. Die aus dem Gasgenerator radial austretende Gasströmung wird durch ringsegmentförmige Ausströmkanäle des Leitelements in axiale Richtung umgelenkt.

Aufgabe der Erfindung ist es, bei einem langgestreckten Gassack eines Seitengassackmoduls eine definierte Gasverteilung mit kompakten Bauteilen zu ermöglichen.

Zur Lösung dieser Aufgabe wird eine Baugruppe der eingangs genannten Art mit den kennzeichnenden Merkmalen des Anspruchs 1 vorgeschlagen. Über die beiden Abströmöffnungen lassen sich verschiedene Kammern des Gassacks unabhängig voneinander befüllen. Somit hat das Gehäuse der erfindungsgemäßen Baugruppe die Funktion eines Verteilergehäuses, das mit einer verhältnismäßig kurzen Bauform realisierbar ist und eine Gaslanze oder dergleichen überflüssig macht. Durch entsprechende Ausbildung der Strömungskanäle kann die Gasverteilung je nach Fahrzeugtyp auf die einzelnen Gassackkammem, insbesondere deren Größe, abgestimmt werden, so daß sich ein gewünschtes Entfaltungsverhalten des Gassacks erreichen läßt.

Vorzugsweise weist das Gehäuse einen langgestreckten Mantelabschnitt und zwei stimseitige Endabschnitte auf, und die erste Abströmöffnung ist in einem der stimseitigen Endabschnitte und die zweite Abströmöffnung im Mantelabschnitt des Gehäuses gebildet. Ein solcher Aufbau ermöglicht eine effektive gleichzeitige Befüllung einer, bezogen auf das Fahrzeug, vorderen Gassackkammer über die erste Abströmöffnung und einer hinteren Gassackkammer über die zweite Abströmöffnung.

Der Gasgenerator weist bevorzugt einen Diffusor mit mehreren Ausströmöffnungen auf, wobei die Ausströmöffnungen radial über den gesamten Umfang des Diffusors verteilt sind.

Die Strömungskanäle können ferner durch Sicken im Gasgenerator begrenzt sein.

Bei den bevorzugten Ausführungsformen der Erfindung sind in axialer Richtung zu beiden Seiten der Ausströmöffnungen des Diffusors im wesentlichen radial verlaufende Sicken im Gehäuse vorgesehen, die sich nicht über den gesamten Umfang des Gehäuses erstrecken. Dadurch kann eine spezifische Aufteilung des Gasstroms in einen zur (vorderen) ersten Abströmöffnung strömenden Teil und in einen zur (hinteren) zweiten Abströmöffnung strömenden Teil erreicht werden. Insbesondere die in Umrangsrichtung verlaufenden Sicken lassen sich auch noch nachträglich in das Gehäuse einprägen, so daß die Gasverteilungscharakteristik der erfindungsgemäßen Baugruppe zu einem relativ späten Zeitpunkt bei der Herstellung des Seitengassackmoduls festgelegt werden kann.

Die Erfindung schafft auch ein Seitengassackmodul für ein Insassenrückhaltesystem in einem Kraftfahrzeug mit einer erfindungsgemäßen Baugruppe und mit einem Gassack, der wenigstens eine erste und eine zweite Kammer aufweist, wobei die erste Abströmöffnung in die erste Kammer und die zweite Abströmöffnung in die zweite Kammer mündet.

Schließlich sieht die Erfindung auch ein Insassenrückhaltesystem für ein Kraftfahrzeug mit einem erfindungsgemäßen Seitengassackmodul vor, bei der die erfindungsgemäße Baugruppe im Bereich der C-Säule oder im Bereich der D-Säule des Kraftfahrzeugs angeordnet ist. Eine solche Anordnung der erfindungsgemäßen Baugruppe im hinteren Fahrzeugbereich, die bei entsprechender Auslegung der Gassackkammem möglich ist, ist einer Anordnung im mittleren Fahrzeugbereich aus Platzgründen grundsätzlich vorzuziehen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein erfindungsgemäßes Seitengassackmodul mit entfaltetem Gassack in Seitenansicht;
- Figur 2 ein Gehäuse einer erfindungsgemäßen Baugruppe in perspektivischer Ansicht;
- Figur 3 eine erfindungsgemäße Baugruppe mit teilweise geöffnetem Gehäuse in perspektivischer Ansicht; und
- Figur 4 eine seitliche Innenansicht eines Teils einer erfindungsgemäßen Baugruppe.

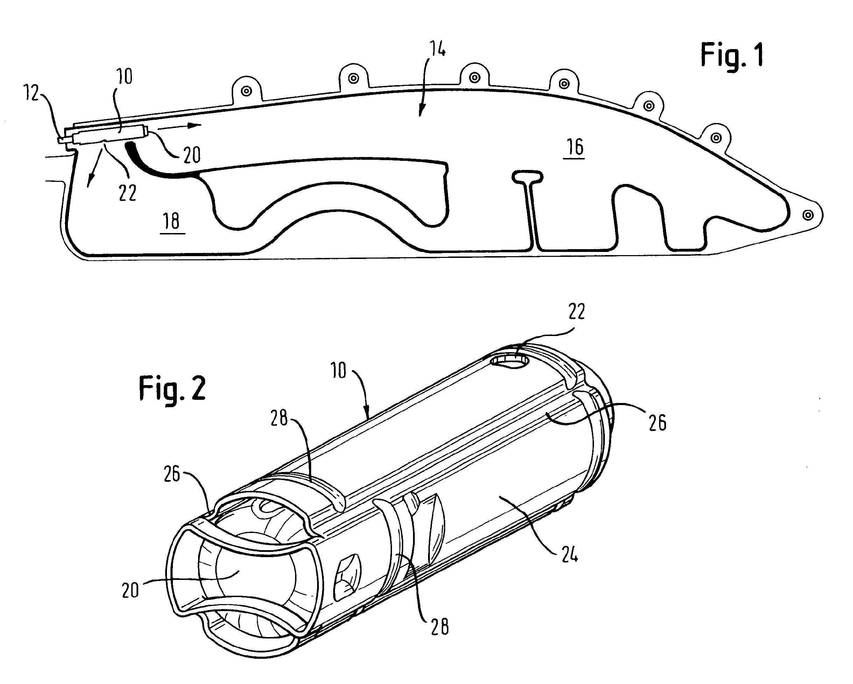

In Figur 1 ist ein Seitengassackmodul mit einem Verteilergehäuse 10, in dem ein Gasgenerator 12 angeordnet ist, und einem entfalteten Gassack 14 dargestellt, der sich über den kompletten Seitenbereich des Innenraums eines Kraftfahrzeugs erstreckt. Bei dem gezeigten Ausführungsbeispiel weist der Gassack 14 eine erste Kammer 16 auf, die den B-Säulenbereich des Fahrzeugs abdeckt, und eine zweite Kammer 18, die den C-Säulenbereich abdeckt. Die aus dem Gehäuse 10 und dem Gasgenerator 12 gebildete Baugruppe ist in diesem Fall im Bereich der C-Säule angeordnet. Bei Fahrzeugen mit D-Säule kann die Baugruppe aber auch im Bereich der D-Säule angeordnet sein. Das Gehäuse 10 weist eine erste und eine zweite Abströmöffnung 20 bzw. 22 auf, wobei die erste Abströmöffnung 20 in die erste Kammer 16 und die zweite Abströmöffnung 22 in die zweite Kammer 18 mündet.

In Figur 2 ist zu erkennen, daß das Gehäuse 10 eine zylinderähnliche Form mit einem langgestreckten Mantelabschnitt 24 und zwei stirnseitigen Endabschnitten hat, wobei die Gesamtlänge des Gehäuses 10 wesentlich kleiner als die einer herkömmlichen Gaslanze ist. Die erste Abströmöffnung 20 ist in einer der Stirnseiten des Gehäuses 10 gebildet, während die zweite Abströmöffnung 22 am entgegengesetzten Ende des Gehäuses 10 im Mantelabschnitt 24 vorgesehen ist. Somit kann das vom Gasgenerator 12 erzeugte Gas durch die erste Abströmöffnung 20 in axialer Richtung und aus der zweiten Abströmöffnung 22 in radialer Richtung aus dem Gehäuse 10 austreten. Das Gehäuse 10 weist mehrere axiale Sicken 26 auf, die sich im wesentlichen über die gesamte Gehäuselänge erstrecken. Bei dem in Figur 2 dargestellten Gehäuse 10 ergibt sich dadurch ein kleeblattartiger Querschnitt. Ferner sind mehrere in Umfangsrichtung verlaufende Sicken 28 vorgesehen, die sich aber jeweils nicht über den gesamten Umfang des Gehäuses 10 erstrecken.

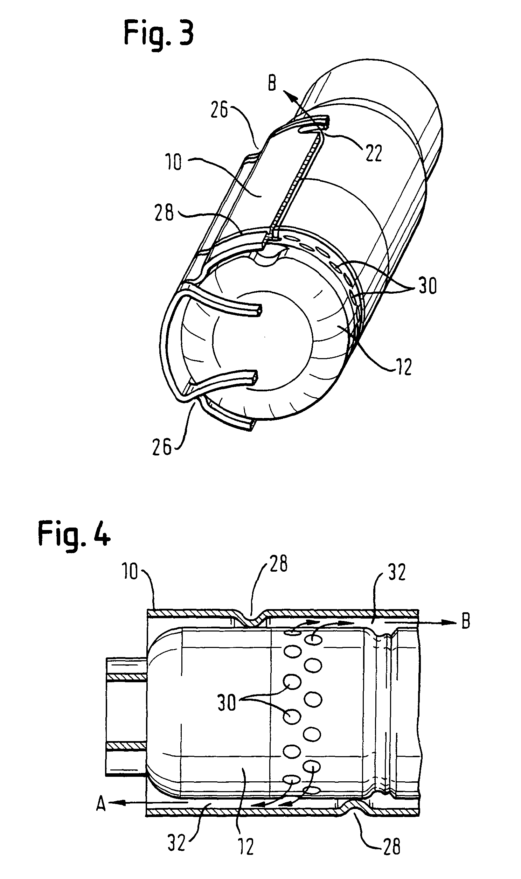

Die Funktion der Sicken 26 und 28 für die Gasverteilung geht aus den Figuren 3 und 4 hervor. Der im Gehäuse 10 aufgenommene Gasgenerator 12 weist einen Diffusor mit einer Vielzahl von Ausströmöffnungen 30 auf. Die Ausströmöffnungen 30 sind gleichmäßig über den gesamten Umfang des Diffusors verteilt. Wie insbesondere in Figur 4 zu erkennen ist, sind zwischen dem Gasgenerator 12 und der Innenseite des Gehäuses 10 Strömungskanäle 32 gebildet, die durch die Sicken 26 und 28 begrenzt sind.

Das vom Gasgenerator 12 erzeugte Gas, das unter großem Druck aus den Ausströmöffnungen 30 austritt, kann sich zwischen zwei axialen Sicken 26 grundsätzlich in beide axialen Richtungen fortbewegen. Die zu beiden Seiten der Ausströmöffnungen 30 angeordneten in Umfangsrichtung verlaufenden Sicken 28 sorgen aber bereichsweise für eine axiale Trennung, die es dem aus den benachbarten Ausströmöffnungen 30 ausströmenden Gas nur gestattet, entweder in Richtung der ersten Abströmöffnung 20 (Pfeil A) oder in Richtung der zweiten 22 (Pfeil B) zu strömen. Die spezifische Anordnung der in Umfangsrichtung verlaufenden Sicken 28 bestimmt somit, wie groß der Anteil des zu einer Abströmöffnung 20 bzw. 22 strömenden Gases ist.

Zur Bildung der Strömungskanäle 32 kann neben dem Gehäuse 10 auch die Formgebung des Gasgenerators 12 beitragen.

## Patentansprüche

1. Baugruppe aus einem Gehäuse (10) und einem im Gehäuse (10) angeordneten Gasgenerator (12) für ein Seitengassackmodul, wobei das Gehäuse (10) wenigstens zwei voneinander beabstandete Abströmöffnungen (20, 22) aufweist und zwischen dem Gasgenerator (12) und der Innenseite des Gehäuses (10) Strömungskanäle (32) für das vom Gasgenerator (12) erzeugte Gas gebildet sind, von denen wenigstens einer zur ersten Abströmöffnung (20) und wenigstens einer zur zweiten Abströmöffnung (22) führt, **dadurch gekennzeichnet, daß** die Strömungskanäle (32) durch radial einwärts gerichtete Sicken (26, 28) im Gehäuse (10) gebildet sind.

2. Baugruppe nach Anspruch 1, **dadurch gekennzeichnet, daß** das Gehäuse (10) einen langgestreckten Mantelabschnitt (24) und zwei stimseitige Endabschnitte aufweist und daß die erste Abströmöffnung (20) in einem der stimseitigen Endabschnitte und die zweite Abströmöffnung (22) im Mantelabschnitt (24) des Gehäuses (10) gebildet ist.

3. Baugruppe nach Anspruch 1 oder 2, **dadurch gekennzeichnet, daß** der Gasgenerator (12) einen Diffusor mit mehreren Ausströmöffnungen (30) aufweist, wobei die Ausströmöffnungen (30) radial über den gesamten Umfang des Diffusors verteilt sind.

4. Baugruppe nach einem der vorhergehenden Ansprüche, **dadurch gekennzeichnet, daß** die Strömungskanäle (32) ferner durch Sicken im Gasgenerator (12) begrenzt sind.

5. Baugruppe nach Anspruch 4, **dadurch gekennzeichnet, daß** in axialer Richtung zu beiden Seiten der Ausströmöffnungen (30) des Diffusors im wesentlichen in Umfangsrichtung verlaufende Sicken (28) im Gehäuse (10) vorgesehen sind, die sich nicht über den gesamten Umfang des Gehäuses (10) erstrecken.

6. Seitengassackmodul für ein Insassenrückhaltesystem in einem Kraftfahrzeug, mit einer Baugruppe nach einem der vorhergehenden Ansprüche, **dadurch gekennzeichnet, daß** das Seitengassackmodul ferner einen Gassack (14) umfaßt, der wenigstens eine erste und eine zweite Kammer (16, 18) aufweist, wobei die erste Abströmöffnung (20) in die erste Kammer (16) und die zweite Abströmöffnung (22) in die zweite Kammer (18) mündet.

7. Insassenrückhaltesystem für ein Kraftfahrzeug mit einem Seitengassackmodul nach Anspruch 6, **dadurch gekennzeichnet, daß** die Baugruppe im Bereich der C-Säule oder im Bereich der D-Säule des Kraftfahrzeugs angeordnet ist.
